Europäisches Patentamt

European Patent Office

Office européen des brevets

(19)

(11) Veröffentlichungsnummer: **0 419 445 A2**

# (12) EUROPÄISCHE PATENTANMELDUNG

(21) Anmeldenummer: 90890259.6

(22) Anmeldetag: 07.09.90

(51) Int. Cl.⁵: **B29C 65/20**, B23Q 1/16

(30) Priorität: 18.09.89 AT 2163/89

(43) Veröffentlichungstag der Anmeldung:
27.03.91 Patentblatt 91/13

(84) Benannte Vertragsstaaten:
**DE ES FR GB IT**

(71) Anmelder: **ACTUAL ANLAGEN-, MASCHINEN-
UND WERKZEUGBAU Gesellschaft m.b.H.
Actual-Strasse 31
A-4053 Haid(AT)**

(72) Erfinder: **Ganzberger, Walter
Ziehbergstrasse 48
A-4053 Haid(AT)**
Erfinder: **Waber, Gerd
Haidlandweg 40
A-4053 Haid(AT)**

(74) Vertreter: **Hübscher, Heiner, Dipl.-Ing. et al
Spittelwiese 7
A-4020 Linz(AT)**

(54) Vorschubeinrichtung für eine Eckenbearbeitungsmaschine od.dgl. zur Bearbeitung von aus Kunststoffprofilen zusammengeschweissten Rahmen, insbesondere Fensterrahmen.

(57) Eine Vorschubeinrichtung (6) für eine Eckenbearbeitungsmaschine (1) zur Bearbeitung von Rahmen (2) besteht aus einem die Rahmen (2) abstützenden Gestell (7), das einen Förderer (10) zur Längsbewegung der Rahmen (2) entlang der Stützebene und im Bereich der Bearbeitungsaggregate (3, 4, 5) eine Schwenkvorrichtung (13) zum Verdrehen der Rahmen (2) um eine zur Stützebene normale Schwenkachse aufnimmt.

Um eine sichere, schonende Rahmenabstützung zu erreichen, bildet das Gestell (7) eine geneigte, vorzugsweise annähernd vertikale Abstützung (8) mit einer unteren, im Bereich der Bearbeitungsaggregate (3, 4, 5) unterbrochenen Führungsschiene (9) for die Rahmen (2) und umfaßt die Schwenkvorrichtung (13) zwei sich in gestreckter Lage fluchtend in die Unterbrechung (12) der Führungsschiene (9) einfügende Stützschenkel (14, 15), die in ihren einander benachbarten Endbereich schwenkbar gelagert und mittels Stelltrieben (16, 23, 24) wenigstens um einen den größten Eckwinkel der Rahmen (2) entsprechenden Schwenkwinkel aus ihrer Strecklage heraus hochschwenkbar sind.

*FIG.2*

EP 0 419 445 A2

# VORSCHUBEINRICHTUNG FÜR EINE ECKENBEARBEITUNGSMASCHINE OD. DGL. ZUR BEARBEITUNG VON AUS KUNSTSTOFFPROFILEN ZUSAMMENGESCHWEISSTEN RAHMEN, INSBESONDERE FENSTER- RAHMEN

Die Erfindung bezieht sich auf eine Vorschubeinrichtung für eine Eckenbearbeitungsmaschine od. dgl. zur Bearbeitung von aus Kunststoffprofilen zusammengeschweißten Rahmen, insbesondere Fensterrahmen, mit einem die Rahmen abstützenden Gestell, das einen Förderer zur Längsbewegung der Rahmen entlang der Stützebene und im Bereich der Bearbeitungsaggregate eine Schwenkvorrichtung zum Verdrehen der Rahmen um eine zur Stützebene normale Schwenkachse aufnimmt.

Bei der Herstellung von Kunststoffrahmen, beispielsweise Kunststoffenster- und -türrahmen, müssen nach dem eigentlichen Schweißvorgang die Schweißstellen in den Rahmenecken nachbearbeitet werden, um ein qualitativ einwandfreies Produkt zu erhalten. Da eine solche Nachbearbeitung zweckmäßigerweise in Schweißnahtrichtung, also in Gehrungsrichtung erfolgt, die Rahmen aber in Längsschenkelrichtung weitertransportiert werden, ist für die Eckenbearbeitungsmaschinen eine Vorschubeinrichtung vorzusehen, mit der die Rahmen sowohl längsbewegt als auch zur Bear beitung verdreht werden können. Bei Vorschubeinrichtungen mit horizontal liegend abgestützten Rahmen gibt es bisher als Förderer einen längsverschiebbaren Mitnehmer zur Längsbewegung des Rahmens entlang von Führungsschienen und als Schwenkvorrichtung eine Unterbrechung der Führungsschienen im Bereich der Bearbeitungsaggregate mit einem zurückspringenden Führungswinkel aus starr oder schwenkbar verlegten Schienenstücken und einen diesem Winkel zugeordneten Querschieber. Die Rahmen werden dabei mittels des Mitnehmers so weit verschoben, bis die zu bearbeitende Ecke im Unterbrechungsbereich liegt, worauf der Querschieber diese Rahmenecke unter gleichzeitigem Verdrehen des Rahmens in den Führungswinkel eindruckt. Damit ist der Rahmen für die Bearbeitung positioniert und muß nach der Bearbeitung wieder zurückgeschoben und zu den Führungsschienen parallelgerichtet werden, wozu neben dem Querschieber noch eine eigene Dreheinrichtung erforderlich ist. Durch das Zusammenwirken von Mitnehmer, Querschieber und Dreheinrichtung können so zwar alle Ecken eines Rahmens nacheinander in die erwünschte Arbeitsposition gebracht werden, doch erfordert diese Vorschubeinrichtung einen beträchtlichen Bau- und Platzaufwand, es sind nur langsame Bewegungsabläufe möglich und durch die auftretenden Kipp und Drehbelastungen lassen sich ohne Beschädigungsgefahr nur liegend abgestiltzte Rahmen transportieren.

Der Erfindung liegt daher die Aufgabe zugrunde, diese Mängel zu beseitigen und eine Vorschubeinrichtung der eingangs geschilderten Art zu schaffen, die bei verhältnismäßig platzsparender und aufwandsdarmer Bauweise eine schonende Rahmenabstutzung auch beim Verdrehen gewährleistet und eine Eckenbearbeitung annähernd vertikal orientierter Rahmen ohne jede Gefahr einer Überbeanspruchung der Schweißstellen erlaubt.

Die Erfindung löst diese Aufgabe dadurch, daß das Gestell in an sich bekannter Weise eine geneigte, vorzugsweise annähernd vertikale Abstützung mit einer unteren, im Bereich der Bearbeitungsaggregate unnterbrochenen Führungsschiene für die Rahmen bildet und die Schwenkvorrichtung zwei sich in gestreckter Lage fluchtend in die Unterbrechung der Führungsschiene einfügende Stützschenkel umfaßt, die in ihren einander benachbarten Endbereichen schwenkbar gelagert und mittels Stelltrieben wenigstens um einen dem größten Eckwinkel der Rahmen entsprechenden Schwenkwinkel aus ihrer Strecklage heraus hochschwenkbar sind. Diese einzeln und/oder gemeinsam verschwenkbaren Stützschenkel können die das zu bearbeitende Rahmeneck bildenden Rahmenschenkel großflächig abstützen und bieten daher auch dem hochgestellten Rahmen während der Drehbewegung und der Bearbeitung einen sicheren Halt, der ein schonendes Behandeln des Rahmens ohne Beschädigungsgefahr ermöglicht. Der Rahmen wird bei abgeschwenkten Stützschenkeln mit einem üblichen Förderer der Führungsschiene entlang in den Bereich der Bearbeitungsaggregate gebracht und nach dem Hochschwenken des in Förderrichtung hinteren Stützschenkels bis zur Anlage an diesen hochgeschwenkten Stützschenkel vorgeschoben. Nun kann der Rahmen durch gemeinsames und gleichsinniges Verschwenken der Stützschenkel beliebig umgeschwenkt und verdreht bzw. in die gewünschte Schwenkstellung für eine Eckenbearbeitung gebracht werden, worauf durch ein Weiterverschwenken der Schenkel der Rahmen um das bearbeitete Eck gekippt ist. Nun wird der in Förderrichtung vordere, noch hochstehende Strützschenkel zurückgeschwenkt, der Rahmen mit dem Förderer um eine Schenkellänge zurückverschoben, bis das nächste Eck im Bearbeitungsbereich liegt und der Schwenkvorgang durch Hochschwenken des hinteren Schenkels, gemeinsames Verschwenken beider Schenkel usw. wiederholt. Nachdem alle Ecken bearbeitet sind, gehen die Stützschenkel wieder in die Strecklage zurück, der Rahmen wird mit dem Förderer aus dem Bearbeitungsbereich hinausgeschoben und der nächste Rahmen kann den Bearbeitungsaggregaten zugebracht werden. Trotz der exakten Abstützung und Führung der Rahmen kommt es zu einer recht einfachen Konstruktion für diese rationell arbeitende Schwenkvorrichtung, die sich zudem noch platzsparend anordnen läßt, so daß genügend Raum für den Einsatz verschiedener Arbeitsaggregate verbleibt.

Besonders zweckmäßig ist es, wenn erfindungsgemäß als Stelltriebe für die Stützschenkel jeweils zwei hintereinandergeschaltete Kolben-Zylindereinheiten vorgesehen sind, deren Hübe dem halben Eckwinkel der Rahmen angepaßten Schwenkbewegungen der Stützschenkel entsprechen. Diese hintereinandergeschalteten Kolben-Zylindereinheiten mit ihren genau definierten Hüben bringen ganz bestimmte Schwenkbewegungen der Stützschenkel mit sich, so daß durch eine geeignete Wahl der Hübe bzw. einer entsprechenden Hebelübersetzung die Schenkel beim Ausfahren der einen Kolben-Zylindereinheit genau den Winkel hochschwenken, der dem halben Eckwinkel des Rahmens gleicht und damit den Rahmen diagonal auf dieses Eck ausrichten, und dann beim zusätzlichen Ausfahren der anderen Einheit die Schwenkbewegung auf den vollen Eckwinkel erweitern und den Rahmen um das entsprechende Eck umkippen. Die Wendevorrichtung bedarf daher keiner aufwendigen Steuerungseinrichtungen und führt allein durch das gezielte Beaufschlagen der Kolben-Zylindereinheiten zu den erforderlichen Schwenkbewegungen.

Um für den genauen Gleichlauf beim gemeinsamen Verschwenken der Stützschenkel zu sorgen, können erfindungsgemäß die Stützschenkel über eine Synchronisiervorrichtung miteinander in Winkellage kuppelbar sein, so daß die Schenkel zwangsweise miteinander verschwenkt werden müssen und den Rahmen während des Schwenkens stets einwandfrei abstützen, auch wenn es bei dem einen oder anderen Stelltrieb der Stützschienen zu Störungen kommen sollte. Die Synchronisiervorrichtung ist selbstverständlich ein- und ausschaltbar, damit es möglich bleibt, die Stützschenkel auch einzeln zu verschwenken.

Als Synchronisiervorrichtungen können verschiedenste Antriebsverbindungen verwendet werden, wobei eine gegengleich an Anschlußarmen der Stützschenkel angreifende Kolben-Zylindereinheit besonders günstig ist, wozu sich aber auch durchaus ein Wellen- oder Nabenteile der Stützschenkellagerung miteinander kuppelnder Ketten- oder Zahnradtrieb, eine an Anschlußarmen der Stützschenkel angelenkte Schubstange od. dgl. eignen. Zum Ein- und Ausschalten der Synchronisiervorrichtungen können verschiedene Kupplungen und Sperren vorgesehen sein, die zweckmäßigerweise ebenfalls über Stelltriebe, vorzugsweise Kolben-Zylindereinheiten, betätigbar sind.

Eine vorteilhafte Konstruktion ergibt sich auch, wenn erfindungsgemäß die Stützschenkel über Winkelarme um eine gemeinsame Achse schwenkbar gelagert und die Winkelarme in einer dem Rahmeneckwinkel entsprechenden Winkellage der Stützschenkel miteinander verriegelbar sind. Durch eine solche gemeinsame Schwenkachse der Stützschenkel wird beim Verschwenken des Rahmens eine Relativverschiebung zwischen Rahmen und Stützschenkel vermieden und die gegenseitige Verriegelung der Winkelarme bringt eine Funktionssichere Synchronisiervorrichtung mit sich.

In der Zeichnung ist der Erfindungsgegenstand rein schematisch veranschaulicht, und zwar zeigen

Fig. 1 und 2 eine erfindungsgemäße Vorschubeinrichtung in teilgeschnittener Stirnansicht und Vorderansicht,

Fig. 3 und 4 die Wendevorrichtung dieser Vorschubeinrichtung in verschiedenen Arbeitsstellungen ebenfalls in Vorderansicht,

Fig. 5, 6 und 7 eine Ausführungsvariante der Wendevorrichtung in verschiedenen Arbeitsstellungen wiederum in Vorderansicht bzw. im Schnitt nach der Linie VI-VI der Fig. 5 sowie die Fig. 8 und 9 ein weiteres Ausführungsbeispiel der Wendevorrichtung in verschiedenen Arbeitsstellungen in Vorderansicht.

Eine Eckenbearbeitungsmaschine 1 zur Bearbeitung von aus Kunststoffprofilen zusammengeschweißten Rahmen 2 ist mit verschiedenen Bearbeitungsaggregaten, beispielsweise einem Schweißnaht-Abziehmesser 3, einem Dichtungsnutfräser 4, einem Außeneckfräser 5 u.dgl. bestückt und weist für den Transport der Rahmen 2 und deren Positionierung in einer Arbeitsstellung eine Vorschubeinrichtung 6 auf. Diese Vorschubeinrichtung 6 besteht aus einem Gestell 7, das eine annähernd vertikal ausgerichtete Abstützung 8 mit einer unteren Führungsschiene 9 für die zu bearbeitenden Rahmen 2 bildet und einen Längsförderer 10, der mit einem Mitnehmer 11 in die Rahmen 2 eingreift, zur Längsbewegung der Rahmen 2 entlang der Führungsschienen 9 aufnimmt. Im Bereich der Bearbeitungsaggregate 3, 4, 5 gibt es in der Führungsschiene 9 eine Unterbrechung 12, in der eine Schwenkvorrichtung 13 zum Verdrehen der Rahmen um eine zur Stützebene normale Schwenkachse Platz findet. Die Schwenkvorrichtung 13 umfaßt dazu zwei Stützschenkel 14, 15, die im Bereich ihrer einander benachbarten Enden schwenkbar am Gestell 7 lagern und über Stelltriebe 16 aus einer fluchtend sich in die Unterbrechung 12 der Führungsschiene 9 einfügenden Strecklage um einen dem Eckwinkel der Rahmen 2 entsprechenden Schwenkwinkel, also meist um 90° hochschwenkbar sind. Durch einzelnes oder gemeinsames Verschwenken dieser Stützschenkel 14, 15 kann so ein zu bearbeitender Rahmen 2 unter gleichzeitiger Abstützung der Rahmenschenkel in die gewünschte Arbeitsposition verdreht und von einem auf den anderen Schenkel umgekippt werden.

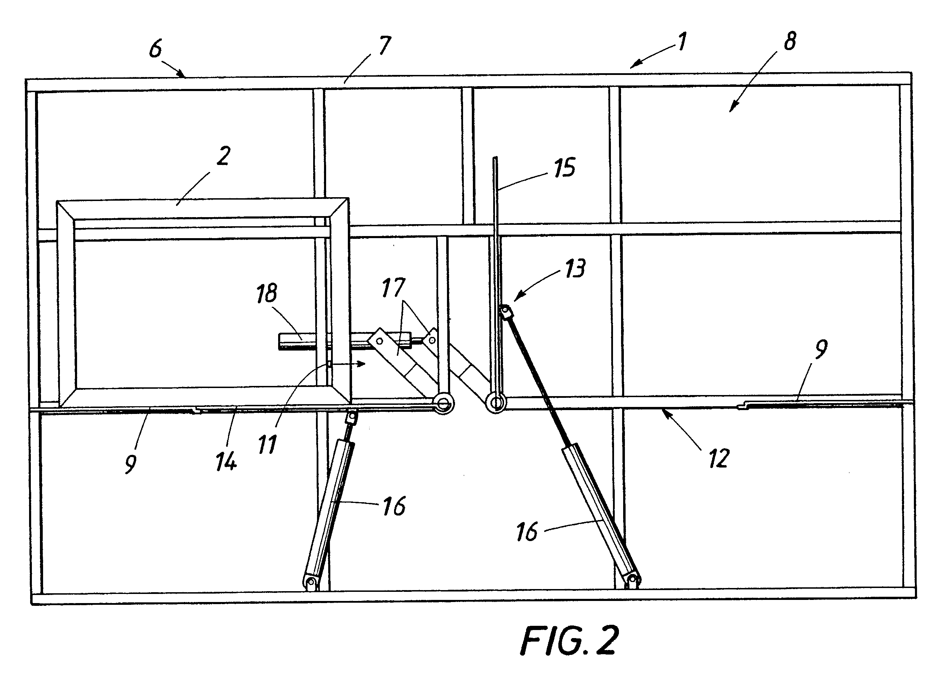

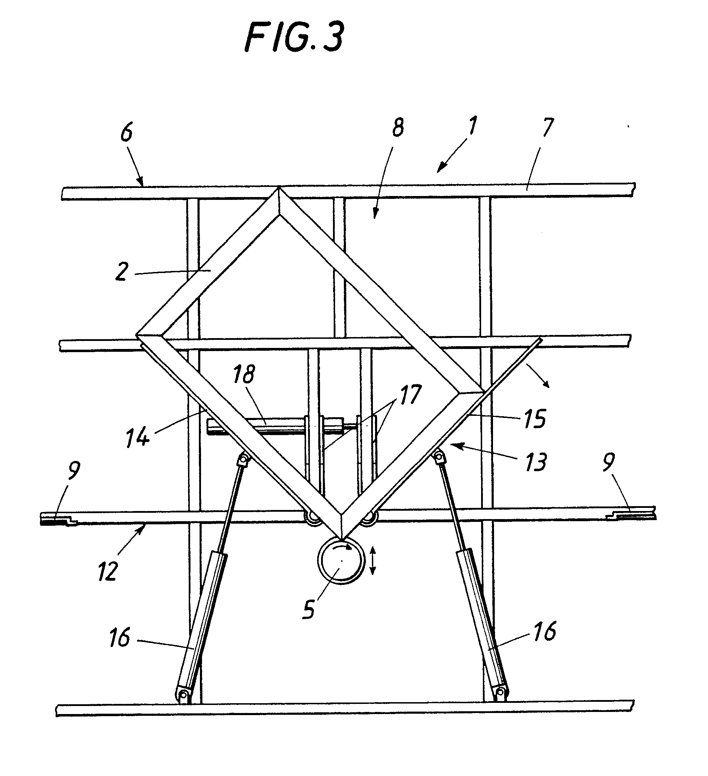

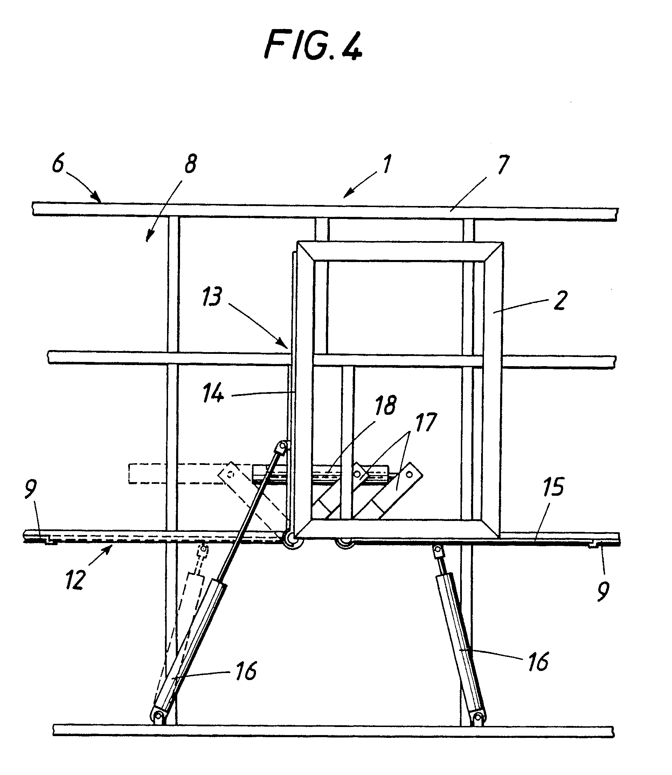

Die Vorschubeinrichtung 6 arbeitet dabei folgendermaßen: Ein zu bearbeitender Rahmen 2 wird, mit einem seiner Schenkel auf der Führungsschiene 9 liegend, mittels des Mitnehmers 11 des Förderers 10 der Abstützung 8 entlang zur Wendevorrichtung 13 bewegt (Fig. 2). Der in Bewegungsrichtung vordere Stützschenkel 14 fluchtet mit der Führungsschiene 9, so daß der Rahmen 2 von der Führungsschiene 9 auf diesen Stützschenkel 14 aufgeschoben werden kann. Der zweite Stützschenkel 15 wird um 90° hochgeschwenkt und der Rahmen 2 weiterbewegt, bis er satt in dem durch die beiden Stützschenkel 14, 15 gebildeten Winkel sitzt und gut abgestützt ist. Nun werden beide Stützschenkel 14, 15 gleichsinnig verschwenkt, bis die Arbeitsposition, beispielsweise eine um 45° geneigte Lage des Rahmens, erreicht ist (Fig. 3). In dieser Position wird der Rahmen in nicht weiter dargestellter Weise festgeklemmt und im Eckbereich bearbeitet, was durch den Einsatz des Außeneckfräsers 5 angedeutet ist. Nach der Bearbeitung werden die beiden Stützschenkel 14, 15 weiterverdreht, bis nun der Stützschenkel 15 wieder mit der Führungsschiene 9 fluchtet und der Stützschenkel 14 senkrecht steht. Dieses Verschwenken bringt ein 90°-iges Verdrehen des Rahmens 2 mit sich, so daß nun nach einem Zurückschwenken des Stützschenkels 14 in die Strecklage und einem Zurückschieben des Rahmens 2 mittels des Mitnehmers in die Ausgangsposition (strichlierte Darstellung in Fig. 4) der Stützschenkel 15 hochschwenken kann und die Schwenkvorrichtung 6 für ein neuerliches Verdrehen des Rahmens 2 bereit ist. Auf diese Weise lassen sich nacheinander alle Rahmenecken den Bearbeitungsaggregaten zuführen und eine vollständig automatische Bearbeitung des Rahmens 2 erreichen. Nach der Bearbeitung des letzten Rahmeneckes wird dann der Rahmen über den oFörderer 10 aus dem Bereich der Schwenkvorrichtung 13 weiterbewegt, der erste Stützschenkel 14 geht wieder in die Strecklage zuruck und ein neuer Rahmen 2 kann zugebracht werden.

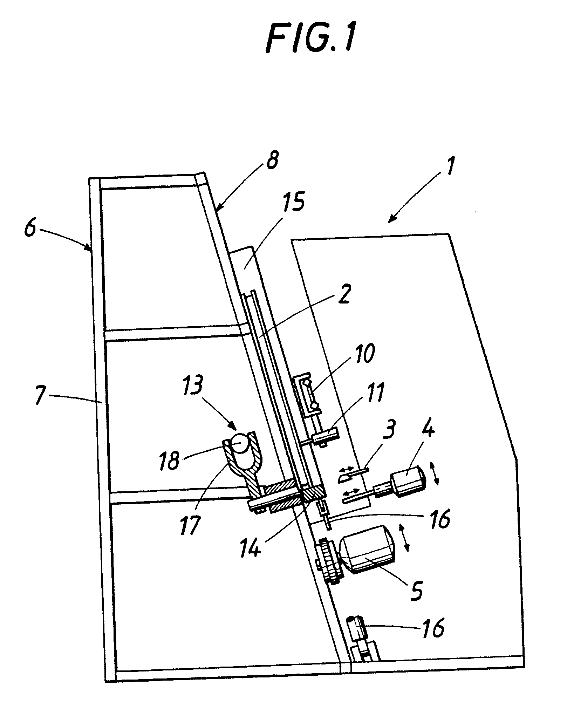

Gemäß dem Ausführungsbeispiel nach Fig. 1 bis 4 sind die Stützschenkel 14, 15 mit unter 45° geneigten Anschlußarmen 17 drehfest verbunden, zwischen denen sich eine Kolben-Zylindereinheit 18 abstützt, so daß sich eine Synchronisiervorrichtung für die Schwenkbewegung der beiden Stützschenkel 14, 15 ergibt. Diese Kolben-Zylindereinheit 18 erlaubt je nach Beaufschlagung eine Bewegungskupplung der beiden Anschlußarme 17 und damit der Stutzschenkel 14,15 oder eine Relativverdrehung der Arme bzw. der Stützschenkel 14, 15, so daß die zum Verdrehen der Rahmen 2 erforderlichen Stützschenkelbewegungen exakt ausführbar sind.

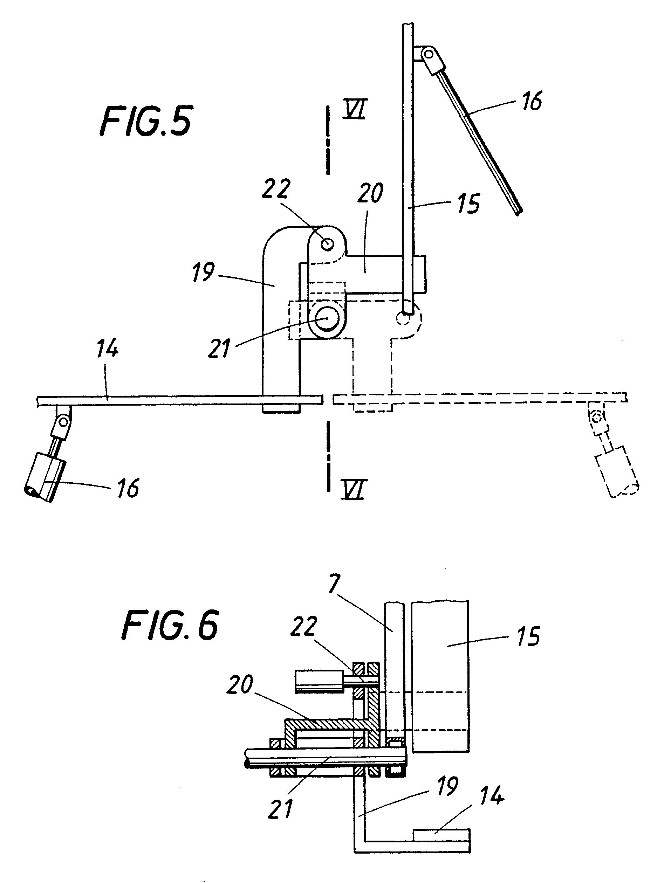

Gemäß dem Ausführungsbeispiel nach Fig. 5 bis 7 sind die Stützschenkel 14, 15 über Winkelarme 19, 20 um eine gemeinsame Achse 21 schwenkbar gelagert, wobei die Winkelarme 19, 20 in abgewinkelter Stützschenkellage miteinander über einen ein- und ausrückbaren Bolzen 22 verriegelbar sind, was wiederum bei gelöster Verriegelung das voneinander unabhängige Verschwenken der Stützschenkel 14, 15 ermöglicht und bei eingerückter Verriegelung in Winkeüage ein gemeinsames, synchrones Verschwenken der Stützschenkel 14, 15 garantiert. Durch die gemeinsame Schwenkachse 21 wird außerdem dafür gesorgt, daß es bei einem Verschwenken zu keiner Relativverschiebung des Rahmens 2 gegenüber den Stützschenkein 14, 15 kommt, die bei zwei verschiedenen Schwenkachsen, wie sie beim Ausführungsbeispiel nach Fig. 1 bis 4 vorhanden sind, auftritt doch zu keiner gefährlichen Belastung des Rahmens führt.

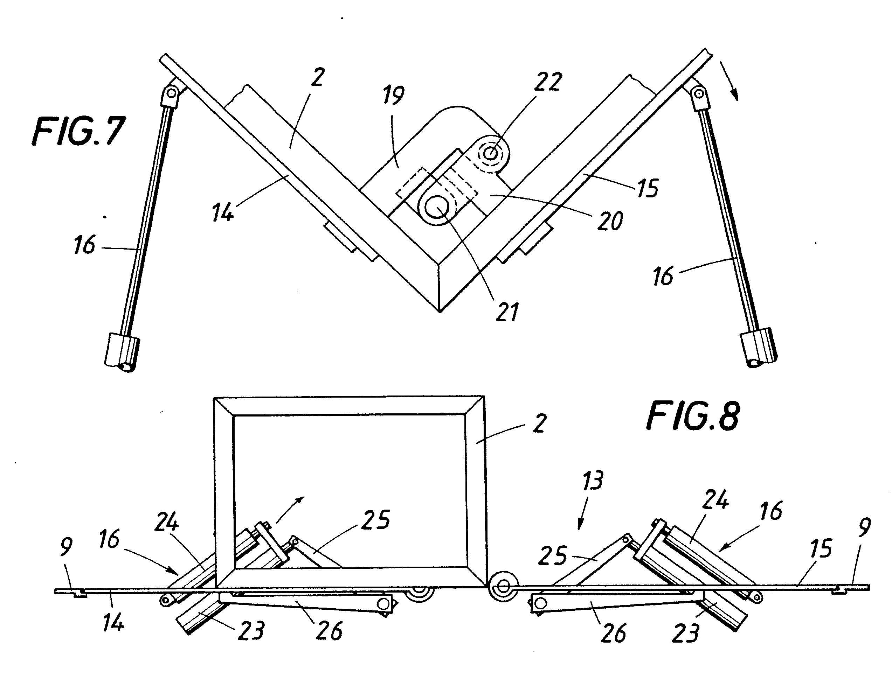

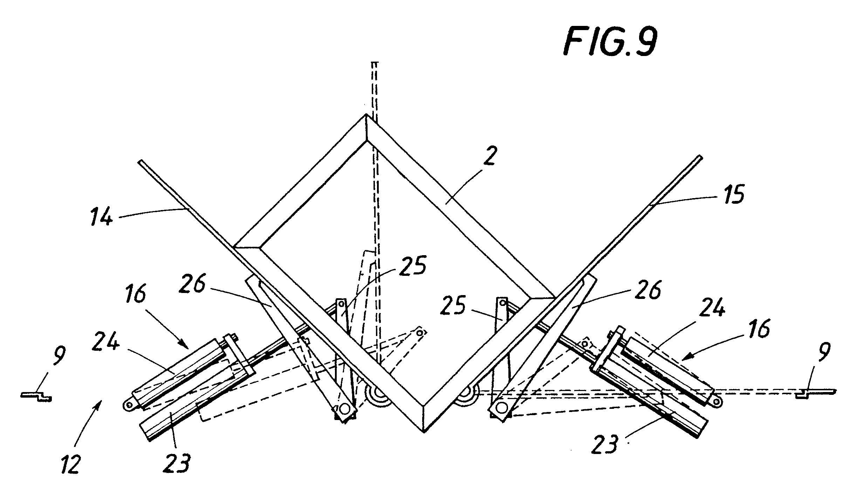

Gemäß dem Ausführungsbeispiel nach Fig. 8 und 9 können als Stelltriebe für die Stützschenkel 14, 15 jeweils zwei hintereinandergeschaltete Kolben-Zylindereinheiten 23,24 vorgesehen sein, deren Hübe jeweils einem 45°-igen Schwenkwinkel der Stützschenkel 14, 15 entsprechen. Aus Platzgründen sind die Kolben-Zylindereinheiten 23, 24 an einem hinter der Abstützung 8 am Gestell 7 schwenkbar gelagerten Schwenkhebel 25 angelenkt, der über einen Betätigungsarm 26 an den Stützschenkeln 14, 15 angreift und diese mitverschwenkt. Je nachdem, ob ein oder beide Kolben-Zylindereinheiten 23, 24 beaufschlagt werden, kommt es so auf rationelle Weise zu einer 45°-igen oder 90°-igen Schwenkbewegung des bzw. der Stützschenkel 14, 15.

Die erfindungsgemäße Vorschubeinrichtung zeichnet sich durch ihre exakte Rahmenführung beim Längsbewegen und Verschwenken der annähernd vertikal orientierten Rahmen aus und bietet vor allem beim Verdrehen eine großflächige, feste Rahmenabstützung, so daß Überbeanspruchungen des Rahmens im Zuge der Eckenbearbeitung sicher vermieden werden.

**Ansprüche**

1. Vorschubeinrichtung (6) finr eine Eckenbearbeitungsmaschine (1) od. dgl. zur Bearbeitung von aus Kunststoffprofilen zusammengeschweißten Rahmen (2), insbesondere Fensterrahmen, mit einem die Rahmen (2) abstützenden Gestell (7), das einen Förderer (10) zur Längsbewegung der Rahmen (2) entlang der Stützebene und im Bereich der Bearbeitungsaggregate (3, 4, 5) eine Schwenkvorrichtung (13) zum Verdrehen der Rahmen (2) um eine zur Stützebene normale Schwenkachse aufnimmt, dadurch gekennzeichnet, daß das Gestell (7) in an sich bekannter Weise eine geneigte, vorzugsweise annähernd vertikale Abstützung (8) mit einer unteren, im Bereich der Bearbeitungsaggregate (3,4,5) unterbrochenen Führungsschiene (9) für die Rahmen (2) bildet und die Schwenkvorrichtung (13) zwei sich in gestreckter Lage fluchtend in die Unterbrechung (12) der Führungsschiene (9) einfügende Stützschenkel (14, 15) umfaßt, die in ihren einander benachbarten Endbereichen schwenkbar gelagert und mittels Steütrieben (16) wenigstens um einen dem größten Eckwinkel der Rahmen (2) entsprechenden Schwenkwinkel aus ihrer Strecklage heraus hochschwenkbar sind.

2. Vorschubeinrichtung nach Anspruch 1, dadurch gekennzeichnet, daß als Stelltriebe (16) für die Stützschenkel (14,15) jeweils zwei hintereinandergeschaltete Kolben-Zylindereinheiten (23, 24) vorgesehen sind, deren Hübe dem halben Eckwinkel der Rahmen (2) angepaßten Schwenkbewegungen der Stützschenkel (14, 15) entsprechen.

3. Vorschubeinrichtung nach Anspruch 1 oder 2, dadurch gekennzeichnet, daß die Stützschenkel (14, 15) über eine Synchronisiervorrichtung (18) miteinander in Winkellage kuppelbar sind.

4. Vorschubeinrichtung nach Anspruch 3, dadurch gekennzeichnet, daß eine gegengleich an Anschlußarmen (17) der Stützschenkel (14, 15) angreifende Kolben-Zylindereinheit (18) die Synchronisiervorrichtung bildet.

5. Vorschubeinrichtung nach Anspruch 1 oder 2, dadurch gekennzeichnet, daß die Stützschenkel (14, 15) über Winkelarme (19, 20) um eine gemeinsame Achse (21) schwenkbar gelagert und die Winkelarme (19, 20) in einer dem Rahmeneckwinkel entsprechenden Winkellage der Stützschenkel (14, 15) miteinander verriegelbar sind.

# FIG.1

**FIG.2**

EP 0 419 445 A2

# FIG.3

# FIG.4

**FIG.5**

**FIG.6**

FIG.7

FIG.8

*FIG.9*

EP 0 419 445 A2